# EUROPÄISCHE PATENTSCHRIFT

(11) **EP 1 038 655 B1**
(45) Veröffentlichungstag und Bekanntmachung des Hinweises auf die Patenterteilung: **19.02.2003**
(21) Anmeldenummer: 00106350.2
(22) Anmeldetag: 23.03.2000
(51) Int. Cl.: B29C 65/18

(54) **Verfahren zum Verschweissen von thermoplastischen Folien**
Process for welding thermoplastic sheets
Procédé de soudage de films thermoplastiques

(30) Priorität: 25.03.1999 DE 19913617
(43) Veröffentlichungstag der Anmeldung: 27.09.2000
(73) Patentinhaber: PAUL KIEFEL GMBH, D-83395 Freilassing (DE)
(72) Erfinder: Hinterseer, Heinz, 83395 Freilassing (DE)
(74) Vertreter: Patentanwälte Leinweber & Zimmermann

(56) Entgegenhaltungen:
- DE-A- 2 101 232
- DE-A- 3 929 374
- DE-A- 19 502 228
- DE-A- 19 743 158
- DE-U- 29 720 469
- FR-A- 1 141 100
- FR-A- 2 563 502
- US-A- 2 918 106
- US-A- 5 564 252

## Beschreibung

Die Erfindung bezieht sich auf ein Verfahren zum gleichzeitigen Verschweißen von Paaren übereinander angeordneter Lagen thermoplastischer Folien mit Hilfe von außenseitig der zusammengefügten Folienlagen zur Schweißanlage gebrachten, die Folienlagen aufeinander zu beaufschlagenden, der Schweißwärmezufuhr dienenden Schweißstegen oder dgl.

Bei einem bekannten Verfahren dieser Art (DE 39 29 374), das der Herstellung von hüllen- oder taschenförmigen Artikeln dient, werden zwei Paare von Lagen thermoplastischer Folien unter Zwischenschaltung eines stationären Trennbandes mit Hilfe der Schweißstege zusammengepreßt und dadurch miteinander verschweißt, daß die für das Verschweißen erforderliche Schweißenergie in Form von Wärme jeweils von dem Schweißsteg, der dem benachbarten Folienlagepaar zugewandt ist, diesem Folienlagepaar zugeführt wird, so daß dieses auf die Schweißtemperatur aufgeheizt wird. Die Schweißenergie muß dabei die nahe gelegene der beiden Lagen des Folienlagepaares durchfließen, um auch den Bereich der abgewandten Lage zu erreichen und diesen auf die für das Verschweißen notwendige Schmelztemperatur anzuheben. Die nötige Schmelzenergie muß somit über die äußere Folienlage in die zweite durchdringen und diese ebenfalls auf Schmelztemperatur bringen, so daß der Fügemechanismus letztlich infolge einer Verknetung im thermoplastischen Bereich zustande kommt.

Auf diese Weise sind also zwei Folienlagepaare gleichzeitig verschweißbar. Der Schweißvorgang ist jedoch relativ zeitaufwendig, da die Schweißenergie relativ viel Zeit braucht, um ins Innere des Berührungsbereichs der beiden Folien jedes Folienlagepaares zu gelangen. Insbesondere bei Einsatz dickerer Folien hat sich der entsprechend höhere Zeitbedarf als sehr nachteilig herausgestellt.

Selbstverständlich verbietet sich die vorbeschriebene bekannte Methode, wenn mehr als zwei Folienlagepaare gleichzeitig miteinander verschweißt werden sollen.

Der Erfindung liegt die Aufgabe zugrunde, das Verfahren der eingangs genannten Art so weiter auszubilden, daß eine mit geringerem Zeitaufwand verbundene gleichzeitige Verschweißung von zwei Folienlagepaaren, auch bei relativ stark bemessenen Folien möglich ist.

Das Verfahren nach der Erfindung, bei dem diese Aufgabe gelöst ist, zeichnet sich im wesentlichen dadurch aus, daß bei Einsatz von zwei Folienlagepaaren diesen beiden Folienlagepaaren die Schweißwärme vorzugsweise von innen her durch Verwendung einer zwischen den beiden Folienlagepaaren angeordneten Heizenergiequelle Schweißenergie und ggf. zusätzlich von außen her mittels einer unterstützenden Energiequelle zugeführt wird.

Auf diese Weise läßt sich sehr einfach und in besonders kurzer Zeit eine Aufheizung des Bereichs der zu bildenden Schweißnaht der Folienlagepaare auf die Schweißtemperatur erzielen. Als unterstützende Energiequelle hat sich der Einsatz der die Folienlagepaare von außen gegeneinander beaufschlagenden Schweißstege oder dgl. als günstig herausgestellt. Bei Anwendung des erfindungsgemäßen Verfahrens hat sich die Verwendung einer stegartigen, innenliegenden, flachen Energiequelle als zwischengeschaltete Heizenergiequelle als besonders zweckmäßig erwiesen.

In weiterer sehr vorteilhafter Ausgestaltung des erfindungsgemäßen Verfahrens finden zur gleichzeitigen Verschweißung von n Folienlagepaaren n-1 stegartige, innenliegende, flache Energiequellen Einsatz. Die stegartigen, innenliegenden, flachen Energiequellen geben ihre Energie in beiden Richtungen, nämlich nach oben und nach unten an die jeweils angrenzenden Folienlagepaare ab. Auf diese Weise ist es somit möglich, eine Vielzahl von Folienlagepaaren etagenartig einem Schweißvorgang zu unterziehen. um auf diese Weise die Zahl der gleichzeitig aus den thermoplastischen Folien herstellbaren hüllen- oder taschenförmigen Artikel zu vervielfachen.

Bei einer abgewandelten Ausführungsweise des erfindungsgemäßen Verfahrens findet außer der Aufheizung mit Hilfe einer zwischen zwei jeweils benachbarte Folienlagepaare eingeschalteten zentralen stegartigen Heizenergiequelle außenseitig eine Preßbeaufschlagung bei gleichzeitiger temperierter Plattenpressung statt.

Die Erfindung ist nicht nur auf ein Verfahren sondern auch auf eine Presse zur Durchführung des Verfahrens gerichtet, die gekennzeichnet ist durch zwei der Beaufschlagung einer Mehrzahl, vorzugsweise n Folienlagepaaren dienenden, an ihrer Außenseite anliegenden, die Folienlagepaare aufeinander zu beaufschlagenden Preßelementen, vorzugsweise in Form von selbst aufheizbaren Schweißstegen, sowie n-1 in einer einen rechten Winkel mit der Folienebene einschließenden Ebene liegenden stegartigen, flachen Energiequellen.

Diese Presse zeichnet sich in besonders günstiger weiterer Ausgestaltung durch eine Abzugsvorrichtung für den allen Folienlagepaaren gemeinsamen, vorzugsweise intermittierenden Abzug aus dem Schweißbereich aus.

Zur Unterstützung des Abzugs der Folienlagepaare aus dem Bereich der stegartigen, flachen Energiequellen ist es von Vorteil, wenn in gleicher Ebene wie die stegartigen, flachen Energiequellen flache Stützelemente mit einer das Anhaften der Folienlagepaare unterdrückenden Außenbeschichtung vorgesehen sind.

Die Außenbeschichtung der Stützelemente ist dabei zweckmäßigerweise durch eine wärmebeständige, widerstands-, insbesondere abriebfeste Folienhülle aus Isoliermaterial, vorzugsweise PTFE, ggf. mit Glasgewebeeinlage gebildet. Dabei ist die Folienhülle auf ihrer den benachbarten Folienlagepaaren abgewandten Seite zweckmäßigerweise mit einer Kleberbeschichtung zur Fixierung an den flachen Stützelementen versehen.

Als günstig hat es sich erwiesen, wenn die Folienhülle U-förmig gefaltet um die stegartige, flache Energiequelle herumgelegt und mit den beiden U-Schenkeln am flachen Stützelement anliegend dessen Außenbeschichtung bildet.

Für die Erzeugung der Wärmeenergie können die stegartigen, flachen Energiequellen einen flachen Stegkern als Träger eines elektrisch heizbaren Heizbandes umfassen. In sehr zweckmäßiger Weise ist zumindest derjenige Abschnitt der U-förmig gefalteten Folienhülle, der sich in Anlage am Stegkern befindet, durch das elektrisch heizbare Heizband gebildet.

Die stegartigen flachen Energiequellen sind in sehr günstiger Weise entweder durch elektrisch heizbare Nickelkonstantan-Körper gebildet. Stattdessen ist es auch möglich, daß die flachen Stützelemente durch die Folienpaare in voneinander getrennter Position durch die Presse führende, vorzugsweise 2 bis 3 mm starke Bleche gebildet sind.

Um auf einfache Weise eine Positionierung der Bleche zu gewährleisten, sind sie zweckmäßigerweise im seitlichen Randbereich, der über den Folienrand vorsteht, mit Fixierbohrungen zur Aufnahme von Führungsbolzen versehen.

Weitere Einzelheiten, Vorteile und Merkmale der Erfindung ergeben sich aus der folgenden Beschreibung anhand der beigefügten Zeichnung, und zwar zeigen:
- Fig. 1: eine schematische Seitenansicht einer das erfindungsgemäße Verschweißverfahren mit zwei Folienlagepaaren ermöglichenden Presse,
- Fig. 2: eine schematische Draufsicht auf die Presse nach Fig. 1,
- Fig. 3: eine schematische Ansicht der Presse nach Fig. 1, jedoch erfindungsgemäß weiter ausgestaltet zum Verschweißen von mehr als zwei Folienlagepaaren,
- Fig. 4: eine Presse entsprechend Fig. 1, jedoch mit temperierten Preßplatten anstelle von schmaleren Schweißstegen.

Das erfindungsgemäße Verfahren läßt sich mit Hilfe einer der in der Zeichnung schematisch veranschaulichten Pressen durchführen. Es dient dem gleichzeitigen Verschweissen von Paaren 1, 1' übereinander angeordneter Lagen thermoplastischer Folien. Diese werden mit Hilfe von außenseitig der zusammengefügten Folienlagen zur Schweißanlage gebrachten, die Folien aufeinander zu beaufschlagenden, der Schweißwärmezufuhr dienenden Schweißstegen 2, 3 gleichzeitig verschweißt.

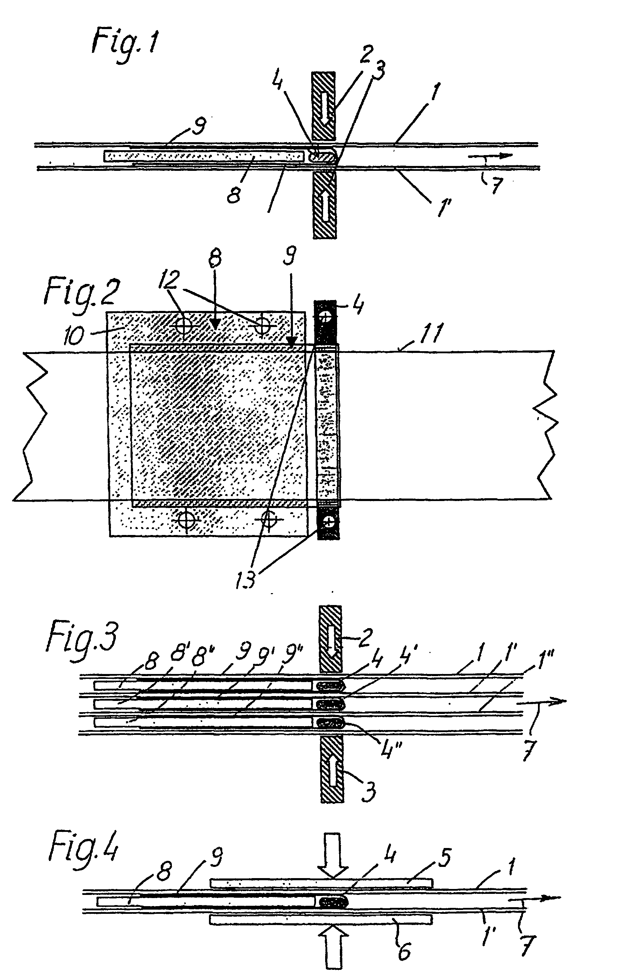

Beim zum Stand der Technik gehörenden Verfahren ist zwischen zwei benachbarten Folienlagepaaren ein stationäres Trennband vorgesehen. Die Schweißenergie muß vom benachbarten Schweißsteg zugeführt werden und dabei letztlich beide Lagen des Folienlagepaares durchfließen, um auch den Bereich der abgewandten Lage zu erreichen. Dies ist in nachteiliger Weise sehr zeitaufwendig. Erfindungsgemäß läßt sich ein rationelleres Verschweißen von zwei Folienlagepaaren 1, 1' dadurch erreichen, daß diesen nicht nur von außen her über die sie von außen gegeneinander beaufschlagenden Schweißstege 2, 3 sondern auch von innen her durch Verwendung einer zwischen den beiden Folienlagepaaren 1, 1' angeordneten Heizenergiequelle 4 Schweißenergie zugeführt wird. Dies geschieht zweckmäßigerweise durch Verwendung einer stegartigen, innenliegenden, flachen Energiequelle als zwischengeschaltete Heizenergiequelle 4. Wie Fig. 3 zeigt, finden zur gleichzeitigen Verschweißung von n Folienlagepaaren 1, 1', 1''... n-1 stegartige, innenliegende, flache Energiequellen 4, 4', 4'',... Einsatz.

Aus Fig. 4 ist eine alternative Vorgangsweise ersichtlich, bei der außer der Aufheizung mit Hilfe einer zwischen zwei jeweils benachbarte Folienlagepaare 1, 1' eingeschalteten zentralen stegartigen Heizenergiequelle 4 außenseitig eine Preßbeaufschlagung unter Einsatz von temperierten Preßplatten 5, 6 stattfindet.

Die in der Zeichnung schematich veranschaulichte Presse zur Durchführung des erfindungsgemäßen Verfahrens weist somit zwei der Beaufschlagung einer Mehrzahl, vorzugsweise n Folienlagepaaren 1, 1',... dienenden, an ihrer Außenseite anliegenden, die Folienlagepaare aufeinanderzu beaufschlagenden Preßelementen 2, 3, 5, 6, vorzugsweise in Form von selbst aufheizbaren Schweißstegen 2, 3, sowie n-1 in einer einen rechten Winkel mit der Folienebene einschließenden Ebene liegenden stegartigen flachen Energiequellen 4, 4', 4"... auf.

Auf nicht näher veranschaulichte Weise ist jeder Presse eine Abzugsvorrichtung für den allen Folienlagepaaren 1, 1', 1", ... gemeinsamen, vorzugsweise intermittierenden Abzug aus dem Schweißbereich in Richtung des Pfeiles 7 zugeordnet.

In gleicher Ebene wie die stegartigen, flachen Energiequellen 4, 4', 4",... sind in der Presse flache Stützelemente 8, 8', 8'',... mit einer das Anhaften der Folienlagepaare 1, 1', 1'',... unterdrückenden Außenbeschichtung vorgesehen. Die Außenbeschichtung der Stützelemente 8, 8', 8",... ist durch eine wärmebeständige, widerstands-, insbesondere abriebfeste Folienhülle 9, 9', 9",... aus Isoliermaterial, vorzugsweise PTFE, ggf. mit Glasgewebeeinlage gebildet.

Auf ihrer den benachbarten Folienlagepaaren 1, 1', 1'',... abgewandten Seite ist jede Folienhülle 9, 9', 9'',... mit einer Kleberbeschichtung zur Fixierung an den flachen Stützelementen 8, 8', 8'',... versehen.

Die Zeichnung läßt erkennen, daß jede Folienhülle 9, 9', 9'',... U-förmig gefaltet um die stegartige, flache Energiequelle 4, 4', 4'',... herumgelegt und mit den beiden U-Schenkeln am flachen Stützelement 8, 8', 8'',... anliegend dessen Außenbeschichtung bildet.

Gemäß einer Ausführungsform der erfindungsgemäßen Presse umfassen die stegartigen, flachen Energiequellen 4, 4', 4",... einen flachen Stegkern als Träger eines elektrisch heizbaren Heizbandes. Dies läßt sich am einfachsten dadurch erreichen, daß zumindest derjenige Abschnitt der U-förmig gefalteten Folienhülle 9, 9', 9", ..., der sich in Anlage am Stegkern befindet, als elektrisch heizbares Heizband ausgebildet ist.

Gemäß einer Alternative ist es auch möglich, daß die stegartigen, flachen Energiequellen 4, 4', 4",... durch elektrisch heizbare Nickelkonstantan-Körper gebildet sind. Der Draufsicht in Fig. 2 ist zu entnehmen, daß die flachen Stützelemente 8, 8', 8",... durch die Folienpaare 1, 1', 1",... in voneinander getrennter Position entsprechend der Pfeilrichtung 7 intermittierend durch die Presse führende, vorzugsweise 2 bis 3 mm starke Bleche gebildet sind. Außerdem zeigt diese Fig. 2, daß die Bleche 8, 8', 8'',... im seitlichen Randbereich 10, der über den seitlichen Rand 11 der Folienlagepaare 1, 1', 1'',... vorsteht, mit Fixierbohrungen 12 zur Aufnahme von nicht näher dargestellten Halterungsbolzen versehen sind.

Analog sind in den seitlich vorstehenden Enden der flachen Energiequellen 4, 4', 4'',... Stromanschlußbohrungen 13 vorgesehen.

## Patentansprüche

1. Verfahren zum gleichzeitigen Verschweißen von Paaren übereinander angeordneter Lagen thermoplastischer Folien mit Hilfe von außenseitig der zusammengefügten Folienlagen zur Schweißanlage gebrachten, die Folienlagen aufeinander zu beaufschlagenden, der Schweißwärmezufuhr dienenden Schweißstegen (2, 3) oder dgl., **dadurch gekennzeichnet, daß** bei Einsatz von zwei Folienlagepaaren (1, 1') diesen beiden Folienlagepaaren die Schweißwärme vorzugsweise von innen her durch Verwendung einer zwischen den beiden Folienlagepaaren (1, 1') angeordneten Heizenergiequelle (4) und ggf. zusätzlich Schweißwärme mittels einer unterstützenden Energiequelle (2, 3) zugeführt wird.

2. Verfahren nach Anspruch 1, **gekennzeichnet durch** Verwendung, einer stegartigen, innenliegenden, flachen Energiequelle als zwischengeschaltete Heizenergiequelle (4).

3. Verfahren nach Anspruch 1 oder 2, **dadurch gekennzeichnet, daß** zur gleichzeitigen Verschweißung von n Folienlagepaaren (1, 1', 1'',...) n-1 stegartige, innenliegende, flache Energiequellen (4, 4', 4") Einsatz finden.

4. Verfahren nach einem der Ansprüche 1 bis 3, **dadurch gekennzeichnet, daß** außer der Aufheizung mit Hilfe einer zwischen zwei jeweils benachbarte Folienlagepaare (1, 1', 1",...) eingeschalteten zentralen stegartigen Heizenergiequelle (4, 4', 4",...) außenseitig eine Preßbeaufschlagung unter Einsatz von temperierten Preßplatten (5, 6) stattfindet.

5. Presse zur Durchführung des Verfahrens nach einem der vorstehenden Ansprüche 1 bis 4, **gekennzeichnet durch** zwei der Beaufschlagung einer Mehrzahl, vorzugsweise n Folienlagepaaren (1, 1', 1",...) dienenden, an ihrer Außenseite anliegenden, die Folienlagepaare aufeinander zu beaufschlagenden Preßelementen (2, 3, 5, 6) vorzugsweise in Form von selbst aufheizbaren Schweißstegen (2, 3), sowie n-1 in einer einen rechten Winkel mit der Folienebene einschließenden Ebene liegenden stegartigen flachen Energiequellen (4, 4', 4",...).

6. Presse nach Anspruch 5, **gekennzeichnet durch** eine Abzugsvorrichtung (7) für den allen Folienlagepaaren (1, 1', 1",...) gemeinsamen Abzug aus dem Schweißbereich.

7. Presse nach Anspruch 5 oder 6, **dadurch gekennzeichnet, daß** in gleicher Ebene wie die stegartigen, flachen Energiequellen (4, 4', 4",...) flache Stützelemente (8, 8', 8",...) mit einer das Anhaften der Folienlagepaare (1, 1', 1",...) unterdrückenden Außenbeschichtung vorgesehen sind.

8. Presse nach Anspruch 7, **dadurch gekennzeichnet, daß** die Außenbeschichtung der Stützelemente (8, 8', 8",...) durch eine wärmebeständige, widerstands-, insbesondere abriebfeste Folienhülle (9, 9', 9",...) aus Isoliermaterial, vorzugsweise PTFE, gegebenenfalls mit Glasgewebeeinlage gebildet ist.

9. Presse nach Anspruch 8, **dadurch gekennzeichnet, daß** die Folienhülle (9, 9', 9'',...) auf ihrer den benachbarten Folienlagepaaren (1, 1', 1'',...) abgewandten Seite mit einer Kleberbeschichtung zur Fixierung an den flachen Stützelementen (8, 8', 8",...) versehen ist.

10. Presse nach einem der Ansprüche 7 bis 9, **dadurch gekennzeichnet, daß** jede Folienhülle (9, 9', 9",...) U-förmig gefaltet um die stegartige, flache Energiequelle (4, 4', 4",...) herumgelegt und mit den beiden U-Schenkeln am flachen Stützelement (8, 8', 8'',...) anliegend dessen Außenbeschichtung bildet.

11. Presse nach einem der Ansprüche 5 bis 10, **dadurch gekennzeichnet, daß** die stegartigen, flachen Energiequellen (4, 4', 4",...) einen flachen Stegkern als Träger eines elektrisch heizbaren Heizbandes umfassen.

12. Presse nach den Ansprüchen 10 und 11, **dadurch gekennzeichnet, daß** zumindest derjenige Abschnitt der U-förmig gefalteten Folienhülle (9, 9', 9",...), der sich in Anlage am Stegkern befindet, durch das elektrisch heizbare Heizband gebildet ist.

13. Presse nach Anspruch 5, **dadurch gekennzeichnet, daß** die stegartigen flachen Energiequellen (4, 4', 4",...) durch elektrisch heizbare Nickelkonstantan-Körper gebildet sind.

14. Presse nach Anspruch 7, **dadurch gekennzeichnet, daß** die flachen Stützelemente (8, 8', 8",...) durch die Folienlagepaare (1, 1', 1",...) in voneinander getrennter Position durch die Presse führende, vorzugsweise 2 bis 3 mm starke Bleche gebildet sind.

15. Presse nach Anspruch 14, **dadurch gekennzeichnet, daß** die Bleche im seitlichen Randbereich (10), der über den seitlichen Rand (11) der Folienlagepaare (1, 1', 1",...) vorsteht, mit Fixierbohrungen (12) zur Aufnahme von Halterungsbolzen versehen sind.

## Claims

1. Process for the simultaneous welding of pairs of layers of thermoplastic films arranged one on top of the other with the aid of welding rods (2, 3) or the like serving to supply welding heat and brought into welding contact on the outside of the assembled film layers in order to apply the film layers to one another, **characterised in that**, when two pairs of film layers (1, 1') are used, the welding heat is supplied to these two pairs of film layers preferably from the inside using a heating energy source (4) arranged between the two pairs of film layers (1, 1') and additional welding heat may be supplied by means of an auxiliary energy source (2, 3).

2. Process according to claim 1, **characterised by** the use of a rod-shaped internal flat energy source as the intermediate heating energy source (4).

3. Process according to claim 1 or claim 2, **characterised in that** n-1 rod-shaped internal flat energy sources (4, 4', 4") are used for the simultaneous welding of n pairs of film layers (1, 1', 1", ...).

4. Process according to one of claims 1 to 3, **characterised in that**, in addition to heating with the aid of a central rod-shaped heating energy source (4, 4', 4", ...) inserted between two adjacent pairs of film layers (1, 1', 1", ...), pressure is applied to the outside using temperature-controlled pressing plates (5, 6).

5. Press for carrying out the process according to one of the preceding claims 1 to 4, **characterised by** two pressing elements (2, 3, 5, 6), preferably in the form of welding rods (2, 3) which are themselves heatable, serving to apply pressure to a plurality, preferably n pairs of film layers (1, 1', 1", ...) and bearing against the outside thereof in order to apply the pairs of film layers to one another, as well as n-1 rod-shaped flat energy sources (4, 4', 4", ...) situated in a plane including a right angle with the film plane.

6. Press according to claim 5, **characterised by** a removal device (7) for the common removal of all of the pairs of film layers (1, 1', 1", ...) from the welding area.

7. Press according to claim 5 or claim 6, **characterised in that** flat supporting elements (8, 8', 8", ...) with an outer coating preventing adhesion of the pairs of film layers (1, 1', 1", ...) are provided in the same plane as the rod-shaped flat energy sources (4, 4', 4", ...).

8. Press according to claim 7, **characterised in that** the outer coating of the supporting elements (8, 8', 8", ...) is formed by a heat-resistant, durable, in particular abrasion-resistant film covering (9, 9', 9", ...) made of insulating material, preferably PTFE, possibly with a glass cloth insert.

9. Press according to claim 8, **characterised in that** the film covering (9, 9', 9", ...) is provided on its side directed away from the adjacent pairs of film layers (1, 1', 1", ...) with an adhesive coating for fixing to the flat supporting elements (8, 8', 8", ...).

10. Press according to one of claims 7 to 9, **characterised in that** each film covering (9, 9', 9", ...) is folded in a U-shaped manner around the rod-shaped flat energy source (4, 4', 4", ...) and, with the two legs of the U bearing against the flat supporting element (8, 8', 8", ...), forms the outer coating thereof.

11. Press according to one of claims 5 to 10, **characterised in that** the rod-shaped flat energy sources (4, 4', 4", ...) include a flat rod-shaped core serving as a support for an electrically heatable heating strip.

12. Press according to claims 10 and 11, **characterised in that** at least the portion of the film covering (9, 9', 9", ...) folded in a U-shaped manner bearing against the rod-shaped core is formed by the electrically heatable heating strip.

13. Press according to claim 5, **characterised in that** the rod-shaped flat energy sources (4, 4', 4", ...) are formed by electrically heatable nickel-constantan bodies.

14. Press according to claim 7, **characterised in that** the flat supporting elements (8, 8', 8",...) are formed by preferably 2 to 3 mm thick metal sheets guiding the pairs of film layers (1, 1', 1", ...) separately through the press.

15. Press according to claim 14, **characterised in that** the metal sheets are provided in their lateral edge regions (10) projecting beyond the lateral edges (11) of the pairs of film layers (1, 1', 1", ...) with fixing bores (12) for receiving retaining bolts.

## Revendications

1. Procédé pour le soudage simultané de paires de couches de feuilles thermoplastiques disposées les unes au-dessus des autres à l'aide de baguettes d'apport (2, 3) ou analogues amenées en application de soudage au côté extérieur des couches de feuilles assemblées, chargeant les couches de feuilles l'une vers l'autre, servant à l'amenée de la chaleur de soudage, **caractérisé en ce que** lors de l'utilisation de deux paires de couches de feuilles (1, 1'), il est amené à ces deux paires de couches de feuilles la chaleur de soudage de préférence par l'intérieur en utilisant une source d'énergie de chauffage (4) disposée entre les deux paires de couches de feuilles (1, 1') et le cas échéant une chaleur de soudage additionnelle au moyen d'une source- d'énergie de soutien (2, 3).

2. Procédé selon la revendication 1, **caractérisé par** l'utilisation d'une source d'énergie plate, en forme de baguette, située à l'intérieur, comme source d'énergie de chauffage intercalée (4).

3. Procédé selon la revendication 1 ou 2, **caractérisé en ce que** l'on utilise pour le soudage simultané de n paires de couches de feuilles (1, 1', 1", .) n-1 sources d'énergie plates en forme de baguette, situées à l'intérieur (4, 4', 4").

4. Procédé selon l'une des revendications 1 à 3, **caractérisé en ce qu'**à part le chauffage à l'aide d'une source d'énergie de chauffage centrale en forme de baguette (4, 4', 4", .) disposée entre deux paires de couches de feuilles respectivement avoisinantes (1, 1', 1", .), il y a lieu au côté extérieur une charge de pression en utilisant des plaques de pression (5, 6) mises à température.

5. Presse pour l'exécution du procédé selon l'une des revendications précédentes 1 à 4, **caractérisée par** deux éléments de pression (2, 3, 5, 6), de préférence sous la forme de baguettes d'apport auto-chauffantes (2, 3), destinées à charger une pluralité, de préférence n paires de couches de feuilles (1, 1', 1", .), s'appliquant au côté extérieur de celles-ci, chargeant les paires de couches de feuilles les unes vers les autres, ainsi que n-1 sources d'énergie plates en forme de baguettes (4, 4', 4", .) situées dans un plan formant un angle droit avec le plan de la feuille.

6. Presse selon la revendication **5, caractérisée par** un dispositif de tirage (7) pour un retrait commun à toutes ces paires de couches de feuilles (1, 1', 1", .) hors de la zone de soudage.

7. Presse selon la revendication 5 ou 6, **caractérisée en ce que** sont prévus dans le même plan que les sources d'énergie plates en forme de baguette (4, 4', 4", .) des éléments d'appui plats (8, 8', 8", .) présentant un revêtement extérieur empêchant l'adhésion des paires de couches de feuilles (1, 1', 1", .).

8. Presse selon la revendication 7, **caractérisée en ce que** le revêtement extérieur des éléments d'appui (8, 8', 8", .) est formé par une gaine de feuille (9, 9', 9", .) résistant à la chaleur, résistante, notamment résistant à l'abrasion en un matériau isolant, de préférence en PTFE, le cas échéant avec un insert en tissu de verre.

9. Presse selon la revendication 8, **caractérisée en ce que** la gaine de feuille (9, 9', 9", .), sur son côté éloigné des paires de couches de feuilles avoisinantes (1, 1', 1", .) est pourvue d'une couche de colle pour la fixation aux éléments d'appui plats (8, 8', 8", .).

10. Presse selon l'une des revendications 7 à 9, **caractérisée en ce que** chaque gaine de feuille (9, 9', 9", .) est placée, en étant pliée en forme de U, autour de la source d'énergie plate en forme de baguette (4, 4', 4", .) et forme avec les deux branches en U, en s'appliquant à l'élément d'appui plat (8, 8', 8", .), le revêtement extérieur de celui-ci.

11. Presse selon l'une des revendications 5 à 10, **caractérisée en ce que** les sources d'énergie plates en forme de baguette (4, 4', 4", .) entourent un noyau de baguette plat en tant que support d'une bande chauffante électrique.

12. Presse selon les revendications 10 et 11, **caractérisée en ce qu'**au moins le tronçon de la gaine de feuille pliée en U (9, 9', 9", .) qui s'applique au noyau de baguette, est formé par la bande chauffante électrique.

13. Presse selon la revendication 5, **caractérisée en ce que** les sources d'énergie plates en forme de baguette (4, 4', 4", .) sont formées par des corps de nickel-constantan pouvant être chauffés électriquement.

14. Presse selon la revendication 7, **caractérisée en ce que** les éléments d'appui plats (8, 8', 8", .) sont formés par des tôles d'une épaisseur de préférence de 2 à 3 mm passant à travers les paires de couches de feuilles (1, 1', 1", .) en une position séparée, à travers la presse.

15. Presse selon la revendication 14, **caractérisée en ce que** les tôles sont pourvues dans la zone de bord latérale (10) qui fait saillie sur le bord latéral (11) des paires de couches de feuilles (1, 1', 1", ...), de perçages de fixation (12) pour recevoir des boulons de fixation.
